**Europäisches Patentamt**

(19) **European Patent Office**

**Office européen des brevets**

(11) Publication number : **0 425 874 B1**

(12) # EUROPEAN PATENT SPECIFICATION

(45) Date of publication of patent specification :
**09.12.92 Bulletin 92/50**

(51) Int. Cl.$^5$ : **F16B 25/00**

(21) Application number : **90119669.1**

(22) Date of filing : **13.10.90**

(54) **Self-threading screw for plastics and like materials, including soft metals, having a high tearing strenght and a very low threading torque.**

(30) Priority : **31.10.89 IT 2220789**

(43) Date of publication of application :
**08.05.91 Bulletin 91/19**

(45) Publication of the grant of the patent :
**09.12.92 Bulletin 92/50**

(84) Designated Contracting States :
**AT BE CH DE ES FR GB GR IT LI LU NL**

(56) References cited :
**EP-A- 0 088 366**
**DE-U- 8 103 990**
**KUNSTSTOFFE vol. 78, no. 7, July 1988, pages 617-622, München, DE; H. DOMININGHAUS: "Schraubenverbindungen für Bauteile aus-Kunststoff"**

(73) Proprietor : **Sala, Carlo**
**Via Roma 101**
**I-27025 Gambolo (Pavia) (IT)**

(72) Inventor : **Sala, Carlo**
**Via Roma 101**
**I-27025 Gambolo (Pavia) (IT)**

(74) Representative : **Giambrocono, Alfonso, Dr. Ing. et al**
**Ing. A. Giambrocono & C. S.r.l. Via Rosolino Pilo 19/B**
**I-20129 Milano (IT)**

# Description

The present invention relates to a self-threading screw for plastics and like materials, including soft metals, having a thread so designed as to provide the screw with a high tearing strength and, to provide, during the screwing-on operation, a very reduced radial compression and, accordingly, a very reduced overheating of the material to which the screw is applied.

Known self-threading screws for plastics material and the like (e.g. Kunststoffe, vol. 78, no. 7, July 1988, pages 617-622, München, DE; H. Domininghaus: "Schraubenverbindungen für Banteile aus Kunstoff") have at present a thread angle of 30°-40°, and a thread cross-section perpendicular to the screw axis, said characteristics being considered as the most suitable to assure an optimum ratio of the screwing-on torque and the tearing torque and to provide a clamping torque as even as possible.

The Applicant, after extensive tests, has surprisingly found that the best angle of the thread of a screw for plastic material and the like materials, including soft metals, is, depending on present making methods, included between 15° and 25°, and this in order to reduce to a minimum the radial compression and accordingly the over-heating of the material being stressed by the screw thread. In fact, an excessive radial compression would be susceptible to produce, within a period of time, breakings of the element being clamped. it should be pointed out that the reduction of the friction on the material obtained by reducing the thread angle prevents, as stated, an over-heating of the material from occuring, and, accordingly, allows a perfect forming of the thread to be obtained.

From further carried out tests, the Applicant has arrived at the conclusion that a screw having a small-angle thread has a maximum tearing strength as the angle between the screw thread front portion and stem approaches as far as possible to 90°.

The sole accompanying drawing figure shows schematically the screw thread profile according to the present invention.

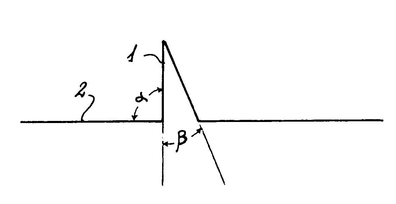

As shown in the figure, the screw thread defines an ideal angle between the thread front portion 1 and stem 2 of 90°, and an ideal angle of the thread of 25°, or even smaller if permitted by the screw making method.

As stated, it has been found that such a thread pattern is the most suitable for screws for plastics and the like materials, included soft metals, since it provides a minimum compression of the material while assuring an optimum tearing strength.

# Claims

1. A self-threading screw for plastic and the like materials, including soft metals, characterized in that said screw has a screw thread with a thread angle not greater than 25°, an optimum value of said angle corresponding to the minimum value which can be obtained by at present available methods.

2. A self-threading screw according to Claim 1, characterized in that said screw thread defines an angle between the thread front portion and screw stem of 90°, or having a value near as possible to 90°.

# Patentansprüche

1. Selbstschneidende Schraube für Kunststoffe und ähnliche Materialien, einschließlich weiche Metalle,
   **dadurch gekennzeichnet,** daß die Schraube einen Schraubengang mit einem Schraubenwinkel nicht größer als 25° aufweist, wobei ein optimaler Wert des Schraubenwinkels dem Minimalwert entspricht, der nach derzeit verfügbaren Verfahren erreichbar ist.

2. Selbstschneidende Schraube nach Anspruch 1, dadurch gekennzeichnet, daß der Schraubengang zwischen seinem Front-bereich und dem Schraubenschaft einen Winkel von 90° oder einen so nahe wie möglich bei 90° liegenden Winkel bildet.

# Revendications

1. Une vis auto-taraudeuse pour le plastique et matières similaires, y compris les métaux tendres, caractérisée en ce que cette vis a un filet de vis avec un angle de filet non supérieur à 25°, valeur optimale de cet angle correspondant à la valeur minimale qui peut être obtenue par les méthodes actuellement disponibles.

2. Une vis auto-taraudeuse conforme à la Revendication 1, caractérisée en ce que ce filet de vis définit un angle entre la partie avant du filet et la tige de la vis de 90°, ou ayant une valeur aussi proche que possible de 90°.